# FASCICULE DE BREVET EUROPEEN

(11) **EP 2 999 937 B1**
(45) Date de publication et mention de la délivrance du brevet: **08.03.2017**
(21) Numéro de dépôt: 14725117.7
(22) Date de dépôt: 15.05.2014
(51) Int. Cl.: F28D 20/02, B60H 1/00

(54) **DISSIPATEUR DE CHALEUR ET CIRCUIT DE GESTION THERMIQUE ASSOCIE**
WÄRMEABLEITER UND ZUGEHÖRIGE WÄRMEVERWALTUNGSSCHALTUNG
HEAT DISSIPATOR AND ASSOCIATED THERMAL MANAGEMENT CIRCUIT

(30) Priorité: 22.05.2013 FR 1354563
(43) Date de publication de la demande: 30.03.2016
(73) Titulaire: Valeo Systemes Thermiques, 78320 Le Mesnil-Saint-Denis Cedex (FR)
(72) Inventeur: AZZOUZ, Kamel, F-75012 Paris (FR); DE PELSEMAEKER, Georges, F-78125 Poigny-la-Forêt (FR)
(74) Mandataire: Metz, Gaëlle
(86) Numéro de dépôt international: PCT/EP2014/060026
(87) Numéro de publication internationale: WO 2014/187734

(56) Documents cités:
- EP-A1- 2 570 281
- EP-A2- 1 657 090
- DE-A1-102004 052 979
- JP-A- H0 277 316

## Description

La présente invention concerne un circuit de gestion thermique pour véhicule automobile notamment au niveau moteur et de l'habitacle. Plus particulièrement, l'invention traite d'un dissipateur de chaleur conforme au préambule de la première revendication. Un tel dispositif est connu, par exemple, du document JP 02 077 316.

Dans le domaine automobile les circuits de gestion thermique peuvent comporter deux boucles de régulation thermique. Une première boucle dite haute température (HT) avec un fluide caloporteur en circulation ayant une température moyenne élevée de l'ordre de 80°C à 120°C, et une seconde boucle dite basse température (BT) avec un fluide caloporteur en circulation ayant une température moyenne basse de l'ordre de 30°C à 80°C.

Généralement, une boucle de régulation thermique comporte deux échangeurs de chaleur :
- un premier échangeur de chaleur placé au niveau de la source de chaleur afin de capter de l'énergie calorifique de cette dernière et la transmettre à un premier fluide caloporteur, et
- un second échangeur de chaleur servant de dissipateur, relâchant l'énergie calorifique du premier fluide caloporteur vers un second fluide caloporteur, généralement l'air extérieur au véhicule.

Dans le cas d'une boucle haute température, le premier échangeur est placé au niveau du moteur à combustion et le second échangeur de chaleur servant de dissipateur est un radiateur également placé sur la face avant du véhicule.

Dans le cas d'une boucle basse température, le premier échangeur peut être un refroidisseur d'air de suralimentation (RAS) et/ou un condenseur à eau d'un système de climatisation. Le second échangeur de chaleur servant de dissipateur est quand à lui placé dans le flux d'air entrant dans l'habitacle du véhicule et relié au RAS et/ou au condenseur à eau.

Les dissipateurs de chaleurs sont généralement surdimensionnés afin de résister et dissiper suffisamment de chaleur dans des conditions extrêmes selon des spécifications imposées par les constructeurs automobiles. Les dissipateurs sont donc dimensionnés pour satisfaire des besoins thermiques maximum théoriques bien supérieurs à ce qu'ils traitent en moyenne et fonctionnent en condition dite normale à puissance partielle.

Ainsi, du fait de ces spécifications, les dissipateurs prennent beaucoup de place et de poids.

Un des buts de l'invention est donc de remédier au moins partiellement aux inconvénients de l'art antérieur et de proposer un dissipateur de chaleur amélioré ayant pour une efficacité identique, un dimensionnement réduit.

La présente invention concerne donc un dissipateur de chaleur conforme à la première revendication.

L'utilisation d'un matériau à changement de phase dans un dissipateur de chaleur, permet d'améliorer son efficacité et permet d'obtenir avec un dissipateur de chaleur de plus petite taille, une efficacité similaire à d'autres de taille plus importante.

L'incorporation du matériau à changement de phase au sein de la au moins une boîte d'entrée et/ou la au moins une boîte de sortie du premier fluide caloporteur permet d'éviter une augmentation de la taille du dissipateur de chaleur.

Selon un autre aspect de l'invention, au moins une boîte d'entrée et/ou au moins une boîte de sortie du premier fluide caloporteur comportant les capsules de matériau à changement de phase, comporte des moyens de retenue desdites capsules de matériau à changement de phase au sein de ladite boîte d'entrée et/ou de ladite boîte de sortie du premier fluide caloporteur.

Selon un autre aspect de l'invention, les moyens de retenue sont placés aux entrées et/ou sorties des surfaces d'échanges et à l'entrée d'au moins une boîte d'entrée du premier fluide caloporteur et/ou à la sortie d'au moins une boîte de sortie du premier fluide caloporteur.

Selon un autre aspect de l'invention, les moyens de retenue desdites capsules de matériau à changement de phase au sein d'au moins une boîte d'entrée et/ou d'au moins une boîte de sortie du premier fluide caloporteur, sont des grilles.

Selon un autre aspect de l'invention, les moyens de retenue desdites capsules de matériau à changement de phase au sein d'au moins une boîte d'entrée et/ou d'au moins une boîte de sortie du premier fluide caloporteur, sont des filtres.

Selon un autre aspect de l'invention, les capsules de matériau à changement de phase comportent un traitement de surface oléophobe et/ou hydrophobe.

Selon un autre aspect de l'invention, le matériau à changement de phase a une chaleur latente supérieure ou égale à 280 kJ/m³.

Selon un autre aspect de l'invention, le matériau à changement de phase a une température de changement de phase comprise entre 47°C et 55°C.

Selon un autre aspect de l'invention, le matériau à changement de phase a une température de changement de phase comprise entre 80°C et 110°C.

La présente invention concerne également un circuit de gestion thermique comportant un dissipateur de chaleur comme décrit précédemment, ledit dissipateur de chaleur étant disposé dans une boucle de régulation thermique, dite basse température, dans laquelle le fluide caloporteur a une température moyenne comprise entre 30°C et 80°C.

La présente invention concerne également un circuit de gestion thermique comportant un dissipateur de chaleur comme décrit précédemment, ledit dissipateur de chaleur étant disposé dans une boucle de régulation thermique, dite haute température, dans laquelle le fluide caloporteur a une température moyenne comprise entre 80°C et 120°C.

D'autres caractéristiques et avantages de l'invention apparaîtront plus clairement à la lecture de la description suivante, donnée à titre d'exemple illustratif et non limitatif, et des dessins annexés parmi lesquels :
- la figure 1 montre une représentation schématique d'une boucle haute température,
- La figure 2 montre une représentation schématique d'une boucle basse température
- la figure 3 montre une représentation schématique en coupe d'un dissipateur de chaleur,
- la figure 4 montre une représentation schématique en perspective éclatée d'un dissipateur de chaleur,
- la figure 5 montre une courbe de l'évolution de la température d'air de suralimentation en sortie de différents types de refroidisseurs d'air de suralimentation.

Sur les différentes figures, les éléments identiques portent les mêmes numéros de référence.

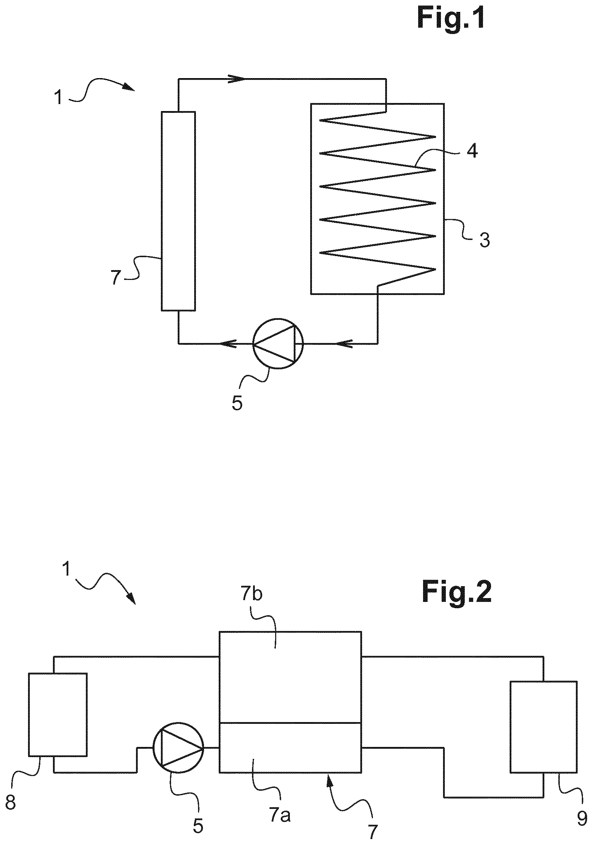

La figure 1 montre une représentation schématique d'un premier exemple de circuit de gestion thermique 1 et plus particulièrement une boucle haute température.

La boucle haute température comprend une source de chaleur, ici le moteur à combustion 3 sur lequel est installé un échangeur de chaleur 4 captant de l'énergie calorifique dudit moteur à combustion 3 pour la transférer à un premier fluide caloporteur, par exemple du liquide de refroidissement. Le premier fluide caloporteur circule dans la boucle de régulation température haute vers un dissipateur de chaleur 7. Au niveau du dissipateur de chaleur 7, le premier fluide caloporteur cède de l'énergie calorifique à un second fluide caloporteur, généralement l'air extérieur au véhicule. Le premier fluide caloporteur retourne ensuite vers l'échangeur de chaleur 4. Une pompe 5 permet la circulation du premier fluide caloporteur au sein de la boucle haute température.

Dans une telle boucle haute température, le premier fluide caloporteur peut avoir une température moyenne comprise entre 80°C et 120°C.

La figure 2 montre une représentation schématique d'un second exemple de circuit de gestion thermique 1 et plus particulièrement une boucle basse température.

Dans cet exemple de circuit de gestion thermique 1, la source de chaleur peut être par exemple un refroidisseur d'air de suralimentation (RAS) 8 et/ou un condenseur à eau 9 relié à un circuit de climatisation (non représenté). Le dissipateur de chaleur 7 peut, dans le cas d'une boucle basse température, comprendre deux passes 7a, 7b. Le premier fluide caloporteur, généralement de l'eau glycolée, capte de l'énergie calorifique en provenance de l'air de suralimentation au niveau du RAS 8, passe au niveau de la première passe 7A du dissipateur de chaleur 7 pour relâcher une partie de cette énergie calorifique vers le second fluide caloporteur, généralement l'air extérieur au véhicule.

Le premier fluide caloporteur passe ensuite dans le condenseur à eau 9 pour échanger de nouveau de l'énergie calorifique avec le circuit de climatisation (non représenté). Le premier fluide caloporteur passe de nouveau au niveau du dissipateur de chaleur 7 mais au niveau de la seconde passe 7b pour relâcher de nouveau de l'énergie calorifique vers le second fluide caloporteur avant de retourner au RAS 8. La circulation du premier fluide caloporteur au sein de la boucle basse température est assurée par une pompe 5.

Dans une telle boucle basse température, le premier fluide caloporteur peut avoir une température moyenne comprise entre 30°C et 80°C.

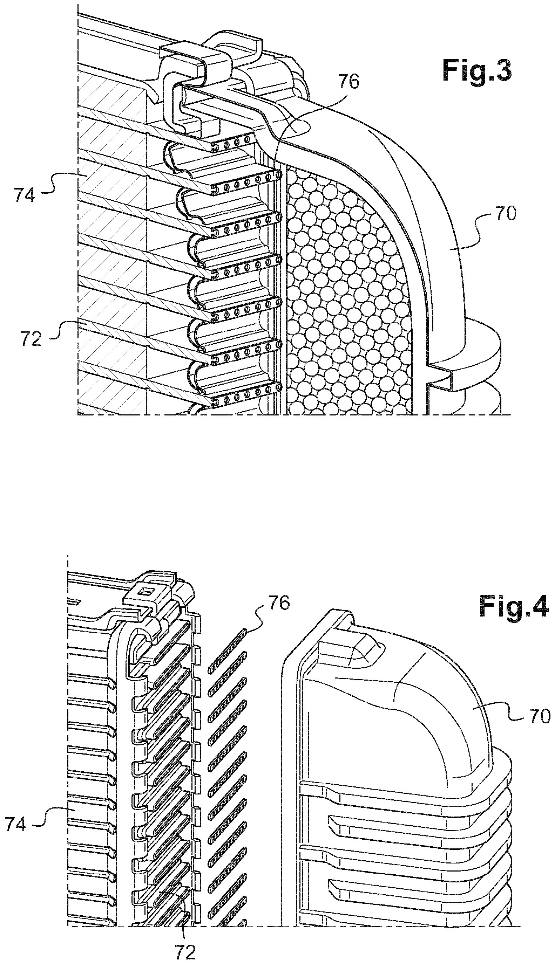

Comme le montre les figures 3 et 4, le dissipateur de chaleur 7 comporte également au moins une boîte d'entrée 70 du premier fluide caloporteur, dans laquelle arrive le premier fluide caloporteur pour être distribué entre des surfaces d'échange thermique 72 entre ledit premier fluide caloporteur et le second fluide caloporteur. Le dissipateur de chaleur 7 comporte également, en sortie des surfaces d'échange thermique 72, au moins une boîte de sortie (non représentée) du premier fluide caloporteur.

Cette boîte de sortie du premier fluide caloporteur collecte le fluide refroidi venant des surfaces d'échange thermique 72 et le guide vers la sortie dudit dissipateur de chaleur 7.

Dans le cas d'une boucle basse température, le dissipateur de chaleur 7 peut comporter une boîte d'entrée 70 du premier fluide caloporteur et une boîte de sortie du premier fluide caloporteur pour chaque passe 7a, 7b.

Les surfaces d'échange thermique 72 peuvent notamment être des tubes plats 72 dans lesquels passe le premier fluide caloporteur. Le second fluide caloporteur circule quant à lui dans l'espace 74 entre lesdits tubes plats 72.

Le dissipateur de chaleur 7 comporte également au sein de sa au moins une boîte d'entrée 70 et/ou de sa au moins une sortie du premier fluide caloporteur un matériau à changement de phase (MCP) 15. Le MCP 15 permet une absorption d'énergie calorifique en provenance du premier fluide caloporteur. Cette énergie calorifique absorbée par le MCP 15 n'est plus à dissiper par le dissipateur de chaleur 7 lors des pics de températures et donc ce dernier peu avoir un dimensionnement inférieur pour une efficacité identique. L'incorporation du MCP 15 au sein de la au moins une boîte d'entrée 70 et/ou la au moins une boîte de sortie du premier fluide caloporteur permet d'éviter une augmentation de la taille du dissipateur de chaleur 7.

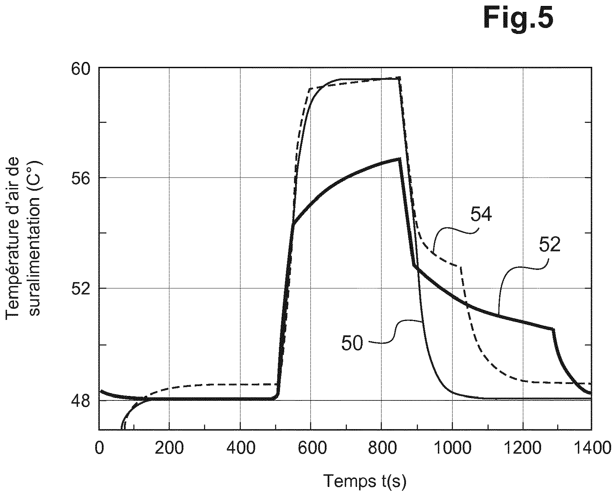

Cela est particulièrement montré par la figure 5, montrant un graphique de l'évolution de la température d'air en sortie d'un RAS 8 en fonction du temps et en fonction de divers types de dissipateur de chaleur 7. On peut mesurer l'efficacité du dissipateur de chaleur 7 au sein d'une boucle basse température en mesurant son influence sur le refroidissement de l'air de suralimentation en sortie du RAS 8.

La première courbe 50 montre l'évolution, en fonction du temps t, de la température d'air en sortie d'un RAS 8 relié à un dissipateur de chaleur 7 classique de l'état de la technique. On remarque quatre zones particulières dans la courbe de température :
- Une zone de température stable de t=0s à t=500s où le turbo compresseur n'est pas en action et où la température d'air en sortie du RAS 8 est constante. Dans les conditions du test, cette valeur est de l'ordre de 48°. Cette valeur de température est bien entendu variable en fonction des conditions de températures extérieures et de la température d'air d'admission. Ainsi en condition climatique froide cette valeur peut être inférieure.
- Une zone d'augmentation brutale de la température entre t=500s et t=600s, correspondant à la mise en action du turbocompresseur qui envoie un air de suralimentation chaud et comprimé au RAS 8.
- Une zone de stabilisation de la température d'air de suralimentation à une valeur de l'ordre de 60°C entre t=600s et t=850s, ce qui correspond aux effets de l'action du RAS 8 par dissipation d'énergie calorifique de l'air de suralimentation. Cette valeur de température est bien sûr fonction de l'efficacité de la boucle basse température et donc de l'efficacité du dissipateur de chaleur 7.
- Une zone entre t=850s et t=1000s, de retour à une température stable de la température d'air en sortie du RAS 8 identique à celle de la première zone du fait de l'arrêt du turbocompresseur.

La seconde courbe 52 correspond quant à elle à l'évolution de la température d'air en sortie d'un RAS 8 relié à un dissipateur de chaleur 8 de dimension identique au précédent et comportant un MCP 15. On retrouve les mêmes zones particulières à quelques différences :
- La zone de stabilisation se fait à une température plus faible, de l'ordre de 54 à 57°C du fait de l'action du MCP 15 qui absorbe de l'énergie calorifique et augmente l'efficacité du dissipateur de chaleur 7.
- La zone de retour à une température stable de la température d'air après l'arrêt du turbocompresseur est plus longue et progressive, de t=850s à t=1400s, du fait de la dissipation progressive de l'énergie calorifique absorbée par le MCP 15.

La troisième courbe 54 correspond à l'évolution de la température d'air en sortie d'un RAS 8 comportant un MCP 15, mais relié à un dissipateur de chaleur 7 de dimension inférieure de l'ordre de 30% aux précédents. L'on remarque alors que :
- La zone de stabilisation est identique à celle du premier dissipateur de chaleur 7 sans MCP 15 illustré par la courbe 50.
- La zone de retour à une température stable de la température d'air après l'arrêt du turbocompresseur est également progressive, entre t=850s et t=1100s, du fait de la dissipation progressive de l'énergie calorifique absorbée par le MCP 15.

L'on peut ainsi obtenir avec un dissipateur de chaleur 7 de plus petite taille, une efficacité similaire à d'autres de taille plus importante, grâce à l'apport d'un MCP 15.

Le MCP 15 peut par exemple être incorporé dans la paroi même de la au moins une boîte d'entrée et/ou la au moins une boîte de sortie d'air de suralimentation.

Le MCP 15 peut également être sous forme de capsules de matériau à changement de phase recouvert d'une couche protectrice de matière polymère. Ce genre de capsule de MCP 15 est bien connu de l'homme du métier. Le MCP 15 utilisé peut notamment être un MCP 15 extrudé ou polymérisé, de forme aléatoire comme par exemple de forme sphérique, demi-sphérique ou de forme amorphe, recouvert d'une couche protectrice de matière polymère. Les capsules de MCP 15 ont de préférence un diamètre compris entre 0.5mm et 8mm. Du fait que le premier fluide caloporteur est un liquide, de l'eau glycolée pour une boucle basse température et du liquide de refroidissement pour une boucle haute température, les capsules de MCP 15 peuvent également comporter un traitement de surface oléophobe et/ou hydrophobe pour augmenter leur résistance à l'oxydation.

Du fait des plages de température d'utilisation dans un circuit de gestion thermique 1 de type boucle haute température, le MCP 15 utilisé peut notamment avoir une température de changement de phase comprise entre 80°C et 110°C. De même, dans un circuit de gestion thermique 1 de type boucle basse température, le MCP 15 utilisé peut notamment avoir une température de changement de phase comprise entre 47°C et 55°C.

De plus, le MCP 15 utilisé peut avantageusement avoir une chaleur latente supérieure ou égale à 280kJ/m³ afin d'avoir une efficacité optimale.

Dans le cas ou le MCP 15 est sous forme de capsules, comme illustré par les figures 3 et 4, la au moins une boîte d'entrée 70 et/ou la au moins une boîte de sortie d'air de suralimentation comportant les capsules de MCP 15, comporte des moyens de retenue 76 desdites capsules de MCP 15 au sein de ladite boîte d'entrée 70 et/ou de ladite boîte de sortie d'air de suralimentation.

Les moyens de retenue 76 sont placés de préférence aux entrées et/ou sorties des surfaces d'échanges 72 afin que les capsules de MCP 15 n'entrent pas entre ces dernières et ne bloquent ou gênent le flux d'air de suralimentation. Les moyens de retenue 76 sont également placés à l'entrée de la au moins une boîte d'entrée 70 d'air de suralimentation et/ou à la sortie de la au moins une boîte de sortie d'air de suralimentation afin que les capsulent ne s'échappent dans la conduite entre le RAS 8 et le turbocompresseur 3 ou vers les cylindres de combustion 5.

Les moyens de retenue 76 peuvent être par exemple des grilles de maille inférieure au diamètre des capsules de MCP 15 ou encore des filtres de type diffuseur poreux.

Au niveau des entrées et/ou sorties des surfaces d'échanges 72, les moyens de retenue 76 peuvent, selon un premier mode de réalisation montré sur la figure 3, couvrir la surface totale entre la au moins une boîte d'entrée 70 et/ou la au moins une boîte de sortie d'air de suralimentation avec les surface d'échange 72. Selon un second mode de réalisation montré sur la figure 4, les moyens de retenue 76 ne couvrent que les espaces 73 dans lesquelles circulent l'air de suralimentation.

Ainsi, on voit bien que le dissipateur de chaleur 7 selon l'invention permet un refroidissement de l'air de suralimentation amélioré du fait de la présence de matériau à changement de phase 15 en son sein. Le dissipateur de chaleur 7 selon l'invention, à efficacité égale avec un dissipateur de chaleur 7 classique, peut ainsi être de plus faible dimension.

## Revendications

1. Dissipateur de chaleur (7) pour dissipation d'énergie calorifique contenue dans un premier fluide caloporteur et destiné à être placé dans un circuit de gestion thermique (1) d'un véhicule automobile,
ledit dissipateur de chaleur (7) comportant au moins une boîte d'entrée (70) du premier fluide caloporteur, au moins une boîte de sortie du premier fluide caloporteur et des surfaces d'échange thermique (72) entre le premier fluide caloporteur et un second fluide caloporteur,
dispositif dans lequel au moins une boîte d'entrée (70) et/ou au moins une boîte de sortie du premier fluide caloporteur comporte un matériau à changement de phase (15), ledit dispositif étant **caractérisé en ce que** le matériau à changement de phase (15) est:
- incorporé à l'intérieur de la paroi d'au moins une boîte d'entrée (70) et/ou d'au moins une boîte de sortie du premier fluide caloporteur, ou
- placé dans au moins une boîte d'entrée (70) et/ou au moins une boîte de sortie du premier fluide caloporteur sous forme de capsules de matériau à changement de phase (15).

2. Dissipateur de chaleur (7) selon la revendication précédente, **caractérisé en ce qu'**au moins une boîte d'entrée (70) et/ou au moins une boîte de sortie du premier fluide caloporteur comportant les capsules de matériau à changement de phase (15), comporte des moyens de retenue (76) desdites capsules de matériau à changement de phase (15) au sein de ladite boîte d'entrée (70) et/ou de ladite boîte de sortie du premier fluide caloporteur.

3. Dissipateur de chaleur (7) selon la revendication précédente, **caractérisé en ce que** les moyens de retenue (76) sont placés aux entrées et/ou sorties des surfaces d'échanges (72) et à l'entrée d'au moins une boîte d'entrée (70) du premier fluide caloporteur et/ou à la sortie d'au moins une boîte de sortie du premier fluide caloporteur.

4. Dissipateur de chaleur (7) selon l'une des revendications 2 ou 3, **caractérisé en ce que** les moyens de retenue (76) desdites capsules de matériau à changement de phase (15) au sein d'au moins une boîte d'entrée (70) et/ou d'au moins une boîte de sortie du premier fluide caloporteur, sont des grilles.

5. Dissipateur de chaleur (7) selon l'une des revendications 2 ou 3, **caractérisé en ce que** les moyens de retenue (76) desdites capsules de matériau à changement de phase (15) au sein d'au moins une boîte d'entrée (70) et/ou d'au moins une boîte de sortie du premier fluide caloporteur, sont des filtres.

6. Dissipateur de chaleur (7) selon l'une des revendications 1 à 5, **caractérisé en ce que** les capsules de matériau à changement de phase (15) comportent un traitement de surface oléophobe et/ou hydrophobe.

7. Dissipateur de chaleur (7) selon l'une des revendications précédentes, **caractérisé en ce que** le matériau à changement de phase (15) a une chaleur latente supérieure ou égale à 280 kJ/m³.

8. Dissipateur de chaleur (7) selon la revendication précédente, **caractérisé en ce que** le matériau à changement de phase (15) a une température de changement de phase comprise entre 47°C et 55°C.

9. Dissipateur de chaleur (7) selon l'une des revendications 1 à 7, **caractérisé en ce que** le matériau à changement de phase (15) a une température de changement de phase comprise entre 80°C et 110°C.

10. Circuit de gestion thermique (1) comportant un dissipateur de chaleur (7) selon l'une quelconques des revendications 1 à 8, ledit dissipateur de chaleur (7) étant disposé dans une boucle de régulation thermique, dite basse température, dans laquelle le premier fluide caloporteur a une température moyenne comprise entre 30°C et 80°C.

11. Circuit de gestion thermique (1) comportant un dissipateur de chaleur (7) selon l'une quelconques des revendications 1 à 7 et 9, ledit dissipateur de chaleur (7) étant disposé dans une boucle de régulation thermique, dite haute température, dans laquelle le premier fluide caloporteur a une température moyenne comprise entre 80°C et 120°C.

## Patentansprüche

1. Wärmesenke (7) zur Abfuhr von in einem ersten Wärmeträgerfluid enthaltener Wärmeenergie, welche dafür vorgesehen ist, in einem Wärmemanagement-Kreislauf (1) eines Kraftfahrzeugs angeordnet zu sein,
wobei die Wärmesenke (7) mindestens ein Gehäuse zum Eintritt (70) des ersten Wärmeträgerfluids, mindestens ein Gehäuse zum Austritt des ersten Wärmeträgerfluids und Wärmeaustauschflächen (72) zwischen dem ersten Wärmeträgerfluid und einem zweiten Wärmeträgerfluid aufweist,
in welcher Vorrichtung mindestens ein Gehäuse zum Eintritt (70) und / oder mindestens ein Gehäuse zum Austritt des ersten Wärmeträgerfluids ein Phasenänderungsmaterial (15) aufweist, wobei die Vorrichtung **dadurch gekennzeichnet ist, dass** das Phasenänderungsmaterial (15):
- im Inneren der Wand von mindestens einem Gehäuse zum Eintritt (70) und / oder von mindestens einem Gehäuse zum Austritt des ersten Wärmeträgerfluids eingelagert ist, oder
- in mindestens einem Gehäuse zum Eintritt (70) und / oder in mindestens einem Gehäuse zum Austritt des ersten Wärmeträgerfluids in der Form von Kapseln aus Phasenänderungsmaterial (15) angeordnet ist.

2. Wärmesenke (7) nach dem vorhergehenden Anspruch, **dadurch gekennzeichnet, dass** mindestens ein Gehäuse zum Eintritt (70) und / oder mindestens ein Gehäuse zum Austritt des ersten Wärmeträgerfluids, welches die Kapseln aus Phasenänderungsmaterial (15) aufweist, Mittel zum Zurückhalten (76) der Kapseln aus Phasenänderungsmaterial (15) im Inneren des Gehäuses zum Eintritt (70) und / oder des Gehäuses zum Austritt des ersten Wärmeträgerfluids aufweist.

3. Wärmesenke (7) nach dem vorhergehenden Anspruch, **dadurch gekennzeichnet, dass** die Rückhaltemittel (76) an den Eintritten und / oder Austritten der Tauschflächen (72) und am Eintritt von mindestens einem Gehäuse zum Eintritt (70) des ersten Wärmeträgerfluids und / oder am Austritt von mindestens einem Gehäuse zum Austritt des ersten Wärmeträgerfluids angeordnet sind.

4. Wärmesenke (7) nach einem der Ansprüche 2 oder 3, **dadurch gekennzeichnet, dass** die Mittel zum Zurückhalten (76) der Kapseln aus Phasenänderungsmaterial (15) im Inneren von mindestens einem Gehäuse zum Eintritt (70) und / oder von mindestens einem Gehäuse zum Austritt des ersten Wärmeträgerfluids Gitter sind.

5. Wärmesenke (7) nach einem der Ansprüche 2 oder 3, **dadurch gekennzeichnet, dass** die Mittel zum Zurückhalten (76) der Kapseln aus Phasenänderungsmaterial (15) im Inneren von mindestens einem Gehäuse zum Eintritt (70) und / oder von mindestens einem Gehäuse zum Austritt des ersten Wärmeträgerfluids Filter sind.

6. Wärmesenke (7) nach einem der Ansprüche 1 bis 5, **dadurch gekennzeichnet, dass** die Kapseln aus Phasenänderungsmaterial (15) eine ölabweisende und / oder wasserabweisende Oberflächenbehandlung aufweisen.

7. Wärmesenke (7) nach einem der vorhergehenden Ansprüche, **dadurch gekennzeichnet, dass** das Phasenänderungsmaterial (15) eine latente Wärme von größer oder gleich 280 kJ/m³ besitzt.

8. Wärmesenke (7) nach dem vorhergehenden Anspruch, **dadurch gekennzeichnet, dass** das Phasenänderungsmaterial (15) eine Phasenänderungstemperatur besitzt, die zwischen 47°C und 55°C liegt.

9. Wärmesenke (7) nach einem der Ansprüche 1 bis 7, **dadurch gekennzeichnet, dass** das Phasenänderungsmaterial (15) eine Phasenänderungstemperatur besitzt, die zwischen 80°C und 110°C liegt.

10. Wärmemanagement-Kreislauf (1), aufweisend eine Wärmesenke (7) nach einem der Ansprüche 1 bis 8, wobei die Wärmesenke (7) in einem Kreis zur thermischen Regelung, so genannte Niedrigtemperatur, angeordnet ist, in welchem das erste Wärmeträgerfluid eine mittlere Temperatur aufweist, welche zwischen 30°C und 80°C liegt.

11. Wärmemanagement-Kreislauf (1), aufweisend eine Wärmesenke (7) nach einem der Ansprüche 1 bis 7 und 9,
wobei die Wärmesenke (7) in einem Kreis zur thermischen Regelung, so genannte hohe Temperatur, angeordnet ist, in welchem das erste Wärmeträgerfluid eine mittlere Temperatur aufweist, welche zwischen 80°C und 120°C liegt.

## Claims

1. Heat dissipator (7) for dissipating thermal energy contained in a first heat-transfer fluid and intended to be placed in a thermal management circuit (1) of a motor vehicle,
said heat dissipator (7) comprising at least one inlet container (70) for the first heat-transfer fluid, at least one outlet container for the first heat-transfer fluid and heat-exchange surfaces (72) between the first heat-transfer fluid and a second heat-transfer fluid,
in which device at least one inlet container (70) and/or at least one outlet container for the first heat-transfer fluid comprises a phase change material (15), said device being **characterized in that** the phase change material (15) is :
- incorporated within the wall of at least one inlet container (70) and/or at least one outlet container for the first heat-transfer fluid, or
- placed in at least one inlet container (70) and/or at least one outlet container for the first heat-transfer fluid in the form of capsules of phase change material (15).

2. Heat dissipator (7) according to the preceding claim, **characterized in that** at least one inlet container (70) and/or at least one outlet container for the first heat-transfer fluid comprising the capsules of phase change material (15) comprises means (76) for retaining said capsules of phase change material (15) within said inlet container (70) and/or said outlet container for the first heat-transfer fluid.

3. Heat dissipator (7) according to the preceding claim, **characterized in that** the retaining means (76) are placed at the inlets and/or outlets of the exchange surfaces (72) and at the inlet of at least one inlet container (70) for the first heat-transfer fluid and/or at the outlet of at least one outlet container for the first heat-transfer fluid.

4. Heat dissipator (7) according to either of Claims 2 and 3, **characterized in that** the means (76) for retaining said capsules of phase change material (15) within at least one inlet container (70) and/or at least one outlet container for the first heat-transfer fluid are grids.

5. Heat dissipator (7) according to either of Claims 2 and 3, **characterized in that** the means (76) for retaining said capsules of phase change material (15) within at least one inlet container (70) and/or at least one outlet container for the first heat-transfer fluid are filters.

6. Heat dissipator (7) according to one of Claims 1 to 5, **characterized in that** the capsules of phase change material (15) comprise an oil-repellent and/or water-repellent surface treatment.

7. Heat dissipator (7) according to one of the preceding claims, **characterized in that** the phase change material (15) has a latent heat greater than or equal to 280 kJ/m³.

8. Heat dissipator (7) according to the preceding claim, **characterized in that** the phase change material (15) has a phase change temperature of between 47°C and 55°C.

9. Heat dissipator (7) according to one of Claims 1 to 7, **characterized in that** the phase change material (15) has a phase change temperature of between 80°C and 110°C.

10. Thermal management circuit (1) comprising a heat dissipator (7) according to any one of Claims 1 to 8,
said heat dissipator (7) being arranged in a thermal regulation loop, known as the low temperature loop, in which the first heat-transfer fluid has a mean temperature of between 30°C and 80°C.

11. Thermal management circuit (1) comprising a heat dissipator (7) according to any one of Claims 1 to 7 and 9, said heat dissipator (7) being arranged in a thermal regulation loop, known as the high temperature loop, in which the first heat-transfer fluid has a mean temperature of between 80°C and 120°C.
